# EUROPEAN PATENT APPLICATION

(11) **EP 4 686 971 A1**
(43) Date of publication of application: **04.02.2026**
(21) Application number: 25193396.6
(22) Date of filing: 01.08.2025
(51) Int. Cl.: G02B 6/38

(54) **OPTOELECTRONIC ADAPTER**

(30) Priority: 01.08.2024 US 202463678260 P
(71) Applicant: Acon Optics Communications Inc., New Taipai City 231 (TW)
(72) Inventor: CUI, Yang-Yang, New Taipei City 231 (TW); ZHANG, Rui, New Taipei City 231 (TW)
(74) Representative: Viering, Jentschura & Partner mbB Patent- und Rechtsanwälte

(57) **Abstract**

An optoelectronic adapter (A) includes a mating shell (10), a main body (20), an optical transceiver module (30), and two conductive terminals (40). The mating shell (10) has a through hole (11). The main body (20) includes a first portion (21), a second portion (22) connected to the first portion (21), and a penetration hole (23) in communication with the first portion (21) and the second portion (22). The main body (20) passes through the through hole (11), and the second portion (22) has an accommodation groove (221). The optical transceiver module (30) is retained in the accommodation groove (221) and includes a housing (31), an optical mating terminal (32), a transmitter optical sub-assembly (33), and a receiver optical sub-assembly (34) which are respectively connected to the housing (31), and the optical mating terminal (32) protrudes from the penetration hole (23) and is at one side of the first portion (21). The two conductive terminals (40) pass through the main body (20), and portions of the two conductive terminals (40) are in the through hole (11).

## Description

### FIELD OF THE INVENTION

The instant disclosure relates to an optical adapter, and more particular to an optoelectronic adapter capable of transmitting optical and electrical signals at the same time.

### BACKGROUND

Electronic devices are widely utilized in various fields. In general, an electronic device may be connected to the power supply through the mating between a connector and an adapter to obtain the electricity for operation or to conduct certain operations. As the electronic device offers increasingly diverse functions, the electronic device may possess requirements for transmitting other types of signals, for example, optical signals. However, under such configuration, to achieve transmission of different types of signals, another connector or adapter for transmitting that type of signals has to be used. As a result, the physical layout of the electronic device becomes complicated, resulting in inconvenience for the operation of the electronic device. Consequently, such issue is to be addressed.

### SUMMARY OF THE INVENTION

In view of these, an embodiment of the instant disclosure provides an optoelectronic adapter. The optoelectronic adapter comprises a mating shell, a main body, an optical transceiver module, and two conductive terminals. The mating shell has a through hole. The main body comprises a first portion and a second portion connected to each other. The main body has a penetration hole in communication with the first portion and the second portion. The main body passes through the through hole of the mating shell, and the second portion has an accommodation groove. The optical transceiver module is retained in the accommodation groove of the main body. The optical transceiver module comprises a housing, an optical mating terminal, a transmitter optical sub-assembly, and a receiver optical sub-assembly. The optical mating terminal, the transmitter optical sub-assembly, and the receiver optical sub-assembly are respectively connected to the housing, and the optical mating terminal protrudes from the penetration hole and is at one side of the first portion. The two conductive terminals pass through the main body, and portions of the two conductive terminals are in the through hole. Accordingly, one or some embodiments can provide an optoelectronic adapter capable of transmitting optical and electrical signals at the same time.

In some embodiments, the optoelectronic adapter further comprises a housing component connected to the mating shell and enclosing the main body, the optical transceiver module, and the two conductive terminals.

In some embodiments, the mating shell comprises a first body and a second body connected to each other, the through hole is in communication with the first body and the second body, the first portion of the main body is in the first body, and the second portion of the main body is in the second body.

In some embodiments, the second body of the mating shell further comprises a first engaging portion, the second portion of the main body further comprises a second engaging portion, and the first engaging portion of the mating shell is engaged with the second engaging portion of the main body.

**In** some embodiments, the first engaging portion is an engaging groove, and the second engaging portion is a protruding block.

**In** some embodiments, an outer surface of the first body of the mating shell further comprises a positioning portion.

**In** some embodiments, the first body of the mating shell further comprises a first guiding portion, the first portion of the main body further comprises a second guiding portion, and the second guiding portion of the main body is correspondingly limited by the first guiding portion.

**In** some embodiments, the two conductive terminals extend along a first direction, the first guiding portion is an elongated block extending along the first direction, the second guiding portion is a groove, and a shape of the second guiding portion corresponds to a shape of the first guiding portion.

In some embodiments, the second portion of the main body further has an opening in communication with the accommodation groove. The accommodation groove has two sides walls and a bottom portion, the two side walls and the bottom portion are flat surfaces, and the opening is between the two side walls.

In some embodiments, the transmitter optical sub-assembly of the optical transceiver module is arranged along an extension direction of the optical mating terminal, and the receiver optical sub-assembly protrudes from the opening.

### BRIEF DESCRIPTION OF THE DRAWINGS

The instant disclosure will become more fully understood from the detailed description given herein below for illustration only, and thus not limitative of the instant disclosure, wherein:
Fig. 1 illustrates an assembled perspective view showing an optoelectronic adapter is mated with an optoelectronic connector according to an exemplary embodiment of the instant disclosure;
Fig. 2 illustrates an exploded view showing the optoelectronic adapter is detached from the optoelectronic connector according to the exemplary embodiment of the instant disclosure;
Fig. 3 illustrates a perspective view of the optoelectronic adapter of the exemplary embodiment of the instant disclosure;
Fig. 4 illustrates an exploded view (1) of the optoelectronic adapter of the exemplary embodiment of the instant disclosure;
Fig. 5 illustrates an exploded view (2) of the optoelectronic adapter of the exemplary embodiment of the instant disclosure;
Fig. 6 illustrates a cross-sectional view (1) of the optoelectronic adapter of the exemplary embodiment of the instant disclosure;
Fig. 7 illustrates a cross-sectional view (2) of the optoelectronic adapter of the exemplary embodiment of the instant disclosure; and
Fig. 8 illustrates an assembled cross-sectional view showing the optoelectronic adapter of the exemplary embodiment is mated with the optoelectronic connector.

### DETAILED DESCRIPTION

Before the instant disclosure is described in detail in various embodiments, it should be noted that in the following description, the drawings are merely for schematic illustration, which are not necessarily drawn to scale, and not all details are necessarily shown in the drawings.

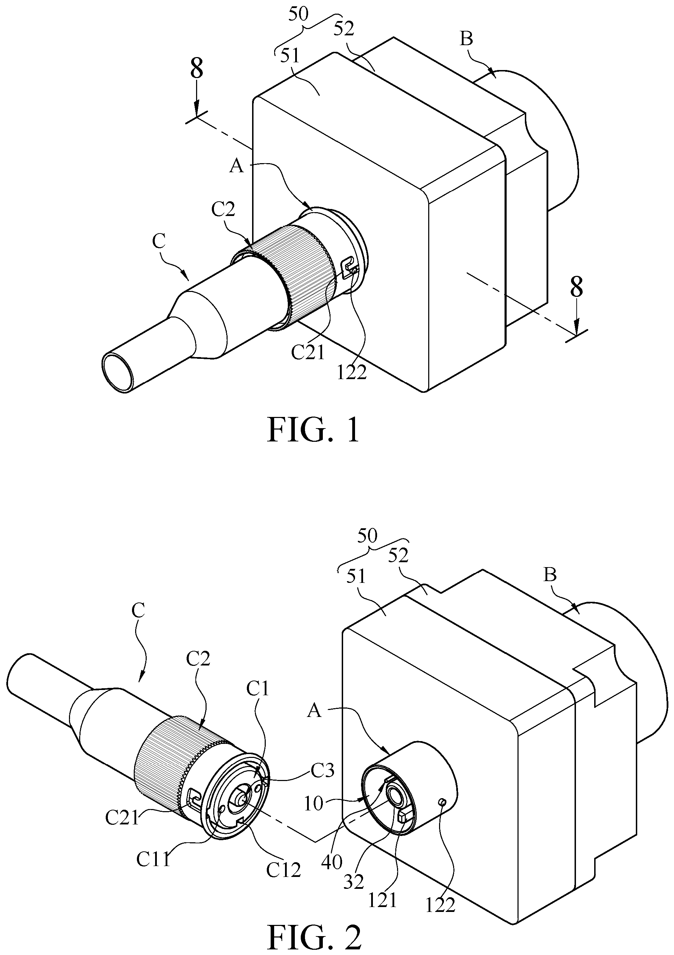

Please refer to Fig. 1 and Fig. 2. Fig. 1 illustrates an assembled perspective view showing an optoelectronic adapter is mated with an optoelectronic connector according to an exemplary embodiment of the instant disclosure. Fig. 2 illustrates an exploded view showing the optoelectronic adapter is detached from the optoelectronic connector according to the exemplary embodiment of the instant disclosure. In this embodiment, an optoelectronic adapter A is provided, which is adapted to be coupled to an optoelectronic connector C for optical signals and electric power transmissions. The optoelectronic adapter A is adapted to be provided on an apparatus or a device which transmits optical signals and is driven by electric power. As shown in Fig. 1 and Fig. 2, the optoelectronic adapter A is configured on a vehicle-mounted camera B (or a radar), and the optoelectronic connector C is coupled to the optoelectronic adapter A of the vehicle-mounted camera B to provide electric power for the vehicle-mounted camera B and to transmit the image captured by the vehicle-mounted camera B.

Please refer to Fig. 2. In some embodiments, the optoelectronic connector C comprises an inner frame C1, a shell C2, and an insertion pin C3. The inner frame C1 has conductive holes C11 and a third guiding portion C12, the shell C2 is rotatably and elastically displaceably fitted over the inner frame C1, and the insertion pin C3 is in the inner frame C1.

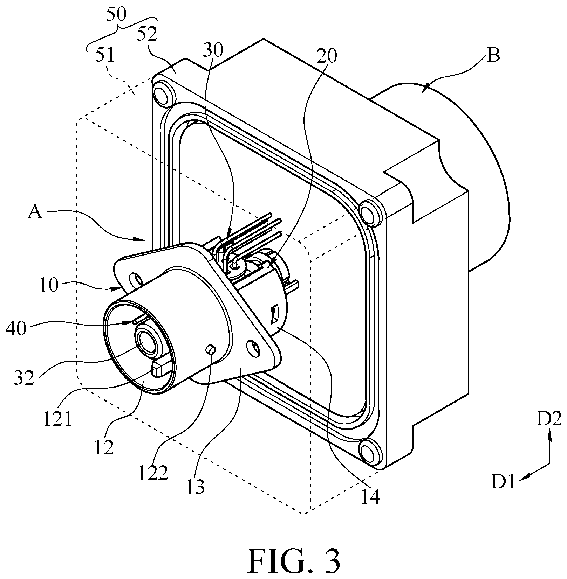

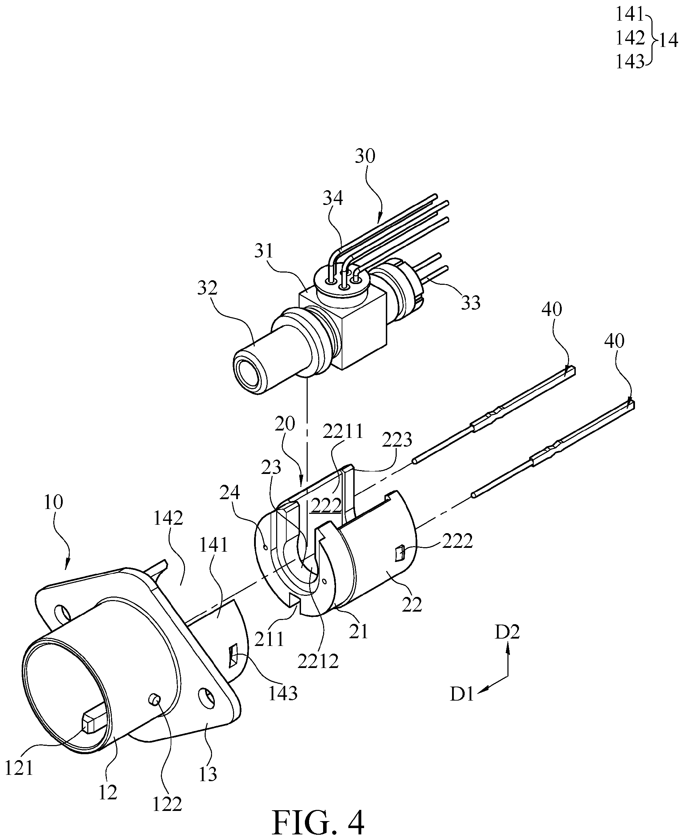

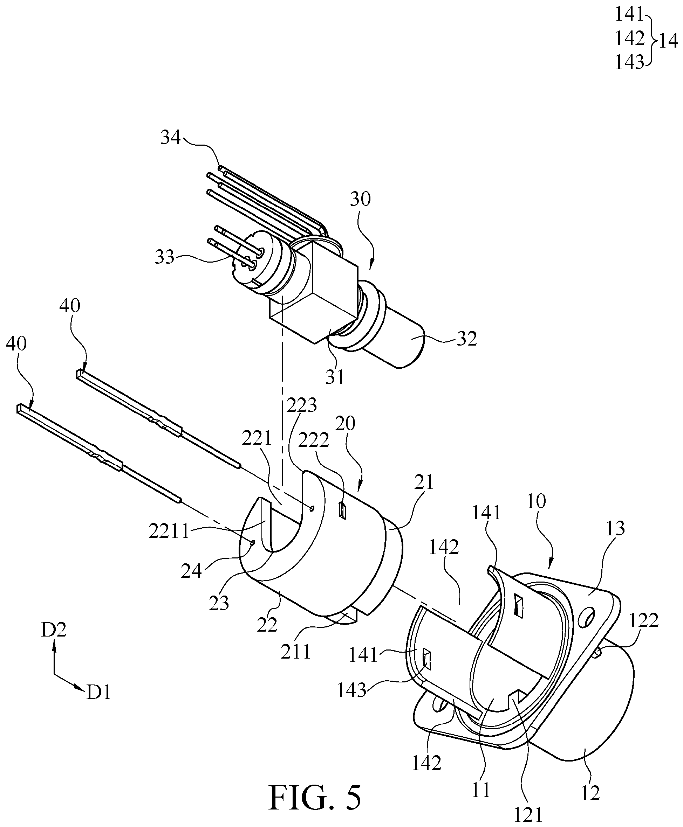

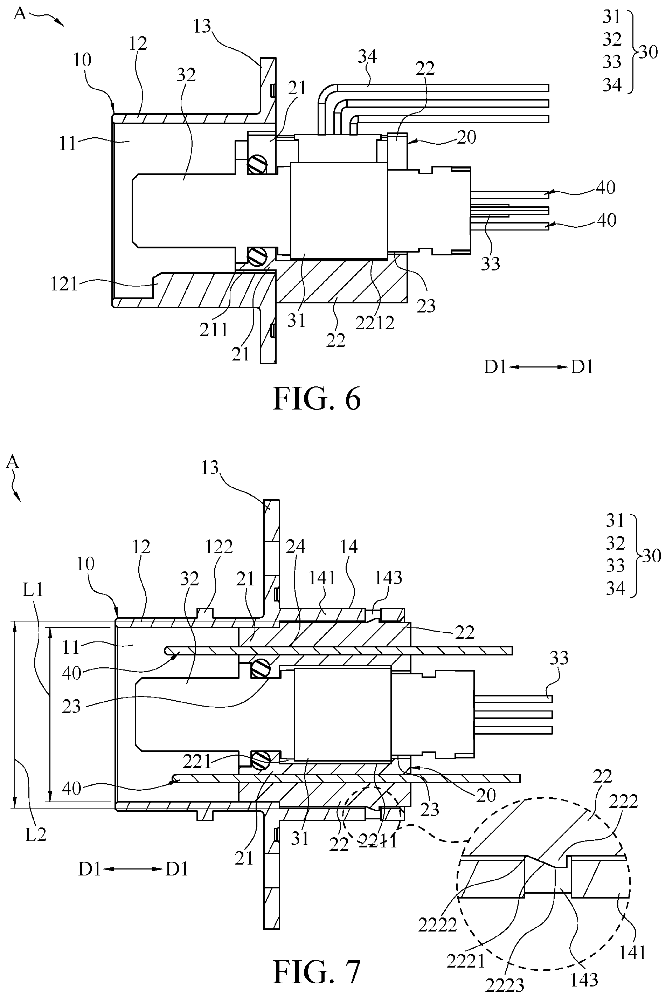

Please refer to Fig. 3 to Fig. 7. Fig. 3 illustrates a perspective view of the optoelectronic adapter of the exemplary embodiment of the instant disclosure. Fig. 4 illustrates an exploded view (1) of the optoelectronic adapter of the exemplary embodiment of the instant disclosure. Fig. 5 illustrates an exploded view (2) of the optoelectronic adapter of the exemplary embodiment of the instant disclosure. Fig. 6 illustrates a cross-sectional view (1) of the optoelectronic adapter of the exemplary embodiment of the instant disclosure. Fig. 7 illustrates a cross-sectional view (2) of the optoelectronic adapter of the exemplary embodiment of the instant disclosure. In this embodiment, the optoelectronic adapter A comprises a mating shell 10, a main body 20, an optical transceiver module 30, and two conductive terminals 40. The mating shell 10 has a through hole 11. The main body 20 comprises a first portion 21 and a second portion 22 connected to each other, and the main body 20 has a penetration hole 23 in communication with the first portion 21 and the second portion 22. The main body 20 passes through the through hole 11 of the mating shell 10, and the second portion 22 has an accommodation groove 221. The optical transceiver module 30 is retained in the accommodation groove 221 of the main body 20, and the optical transceiver module 30 comprises a housing 31, an optical mating terminal 32, a transmitter optical sub-assembly 33, and a receiver optical sub-assembly 34. The optical mating terminal 32, the transceiver optical sub-assembly 33, and the receiver optical sub-assembly 34 are respectively connected to the housing 31. The optical mating terminal 32 protrudes from the penetration hole 23 and is at one side of the first portion 21. The conductive terminals 40 pass through the main body 20, and portions of the conductive terminals 40 are in the through hole 11. Accordingly, one or some embodiments can provide an optoelectronic adapter A capable of supplying electric power and transmitting optical signals at the same time.

Please refer to Fig. 3 to Fig. 7. The mating shell 10 is mainly for carrying the main body 20 and serves as a component for contacting the optoelectronic connector C. In some embodiments, the mating shell 10 has the through hole 11 and comprises a first body 12, an extension portion 13, and a second body 14 sequentially connected to each other, and the through hole 11 is in communication with the first body 12, the extension portion 13, and the second body 14.

Please refer to Fig. 3 to Fig. 7. In these embodiments, the first body 12 is adapted to be fitted over the inner frame C1 of the optoelectronic connector C, and the second body 14 is adapted to be assembled with the main body 20. In these embodiments, the first body 12 is a hollow cylindrical structure extending along a first direction D1, and the first body 12 is configured corresponding to the profile of the through hole 11; in some other embodiments, the profile of the first body 12 of the mating shell 10 may be determined according to the profile of the optoelectronic connector C, and the instant disclosure is not limited thereto.

Please refer to Fig. 3 to Fig. 7. In some embodiments, the second body 14 comprises at least one arced sheet 141 and at least one notch 142. The arced sheet 141 is adapted to be assembled with the main body 20. The notch 142 is adapted to allow the receiver optical sub-assembly 34 of the optical transceiver module 30 to extend therefrom. In these embodiments, the number of the arced sheet 141 is two, and the two arced sheets 141 are symmetrically arranged around the through hole 11. In this embodiment, each of the arced sheets 141 is a quarter circular arc, but the instant disclosure is not limited thereto. In some other embodiments, the number of the arced sheet 141 may be one; in these embodiments, the arced sheet 141 is a three-quarter circular arc, and two ends of the arced sheet 141 thus define the notch 142.

Please refer to Fig. 3 to Fig. 7. In some embodiments, an inner surface of the first body 12 of the mating shell 10 has a first width L1 along a second direction D2 perpendicular to the first direction D1, an inner surface of the second body 14 of the mating shell 10 has a second width L2along the second direction D2, and the second width L2 is greater than the first width L1. Accordingly, through the configuration of the width difference between the inner surface of the first body 12 and the inner surface of the second body 14, the main body 20 can be assembled in a correct orientation, thereby providing mistake-proofing function during the assembling process.

Please refer to Fig. 3 to Fig. 7. The main body 20 is for carrying the optical transceiver module 30 and assembled with the mating shell 10. In some embodiments, the profile of the first portion 21 of the main body 20 approximately corresponds to the profile of the inner surface of the first body 12 of the mating shell 10, and the profile of the second portion 22 of the main body 20 approximately corresponds to the profile of the second body 14 of the mating shell 10. In some embodiments, the first portion 21 corresponds to the inner surface of the first body 12 of the mating shell 10 and is formed as a cylindrical structure, and the second portion 22 corresponds to the inner surface of the second body 14 of the mating shell 10 and is also formed as a cylindrical structure. Moreover, in these embodiments, a diameter of the second portion 22 is greater than a diameter of the first portion 21. Accordingly, when the main body 20 is assembled with the mating shell 10, the first portion 21 of the main body 20 has to be firstly inserted into the second body 14 so as to be inserted into the first body 12, while the second portion 22 of the main body 20 is correspondingly accommodated in the second body 14 and abuts against the extension portion 13. Therefore, the main body 20 is limited by the extension portion 13 of the mating shell 10 to prevent from being detached from the first body 12.

Please refer to Fig. 3 to Fig. 7. In some embodiments, the second body 14 of the mating shell 10 further comprises a first engaging portion 143, the second portion 22 of the main body 20 further comprises a second engaging portion 222, and the first engaging portion 143 of the mating shell 10 is engaged with the second engaging portion 222 of the main body 20.

Please refer to Fig. 3 to Fig. 7. In some embodiments, the first engaging portion 143 and the second engaging portion 222 are concave and convex structures which correspond to each other. In these embodiments, the first engaging portion 143 may be an engaging groove, and the second engaging portion 222 may be a protruding block capable of being accommodated in the engaging groove, but the instant disclosure is not limited thereto. In some other embodiments, the first engaging portion 143 may be a protruding block, and the second engaging portion 222 may be an engaging groove capable of accommodating the protruding block.

Please refer to Fig. 3 to Fig. 7. In some embodiments where the second engaging portion 222 is the protruding block, the second engaging portion 222 has an inclined surface 2221, and the inclined surface 2221 has a first side 2222 and a second side 2223 opposite to each other. Along the first direction D1, the first side 2222 is nearer to the first portion 21 as compared with the second side 2223 (in other words, in this embodiment, a distance between the first side 2222 and the first portion 21 is less than a distance between the second side 2223 and the first portion 21). Moreover, along the second direction D2, the first side 2222 of the second engaging portion 222 is nearer to the optical transceiver module 30 as compared with the second side 2223 of the second engaging portion 222 (in other words, in this embodiment, a distance between the first side 2222 and the optical transceiver module 30 is less than a distance between the second side 2223 and the optical transceiver module 30). Accordingly, when the main body 20 is to be assembled with the mating shell 10, the second engaging portion 222 of the second portion 22 of the main body 20 firstly contacts the first engaging portion 143 of the mating shell 10 with the first side 2222. Then, as long as the operator continuously applies a force on the main body 20 along the first direction D1 toward the mating shell 10, the inclined surface 2221 of the second engaging portion 222 can provide the guiding function to guide the second engaging portion 222 to be accommodated in the first engaging portion 143. Therefore, the first engaging portion 143 and the second engaging portion 222 can be stably engaged with each other, and thus the main body 20 can be stably assembled with the mating shell 10.

Please refer to Fig. 3 to Fig. 7. In some embodiments, the first body 12 of the mating shell 10 further comprises a first guiding portion 121, the first portion 21 of the main body 20 further comprises a second guiding portion 221, and the second guiding portion 211 of the main body 20 is fitted over the first guiding portion 121 of the mating shell 10.

Please refer to Fig. 3 to Fig. 7. In some embodiments, the first guiding portion 121 is an elongate block extending along the first direction D1, the second guiding portion 211 is a groove, and a shape of the second guiding portion 211 corresponds to a shape of the first guiding portion 121. In these embodiments, when the main body 20 is assembling with the mating shell 10, the main body 20 and the mating shell 10 can be assembled with each other in a correct orientation through the mating between the first guiding portion 121 and the second guiding portion 211. Moreover, after the main body 20 is assembled with the mating shell 10, the mating between the first guiding portion 121 and the second guiding portion 211 can further limit the main body 20 from being rotated relative to the mating shell 10, thereby enhancing the structural stability for the optoelectronic adapter A.

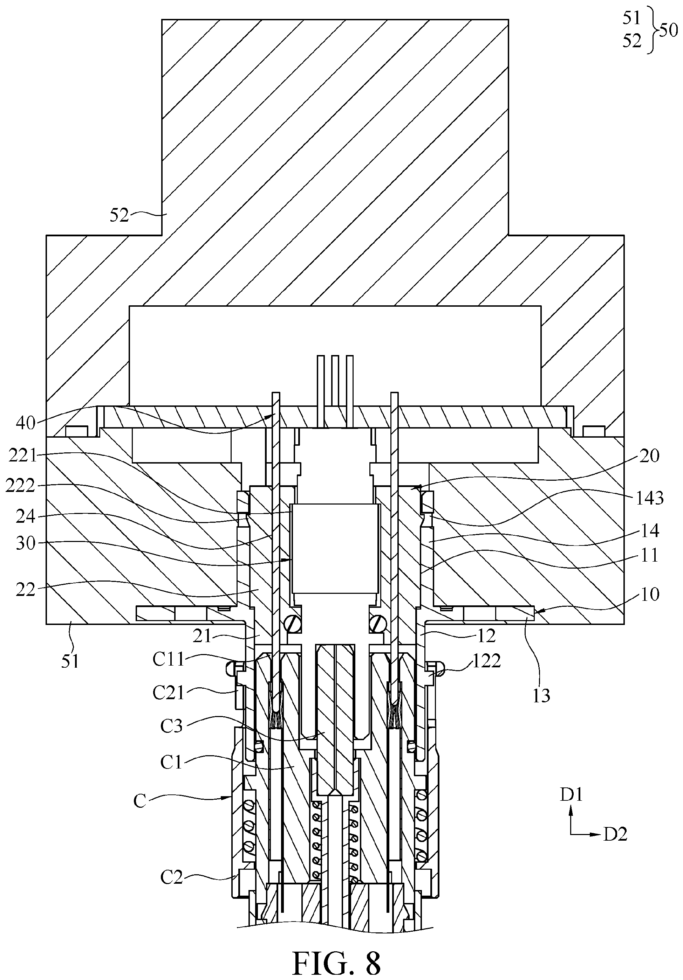

Please refer to Fig. 1, Fig. 2, and Fig. 6 to Fig. 8. Fig. 8 illustrates an assembled cross-sectional view showing the optoelectronic adapter of the exemplary embodiment is mated with the optoelectronic connector. In some embodiments where the mating shell 10 comprises the first guiding portion 121, the inner frame C1 of the optoelectronic connector C has a third guiding portion C12. When the main body 20 is assembled with the mating shell 10, the second guiding portion 211 of the main body 20 is fitted over a portion of the first guiding portion 121; when the optoelectronic adapter A is mating with the optoelectronic connector C, the third guiding portion C12 of the inner frame C1 of the optoelectronic connector C is fitted over the rest portion of the first guiding portion 121. Therefore, it is understood that, the first guiding portion 121 of the mating shell 10 can provide the guiding function for both the optoelectronic connector C and the main body 20, so that the mating shell 10, the main body 20, and the optoelectronic connector C can be assembled with each other in the correct orientation. Moreover, the mating among the first guiding portion 121, the second guiding portion 211, and the third guiding portion C12 can limit the main body 20 and the optoelectronic connector C from being rotated relative to the mating shell 10, thereby enhancing the structural stability for assembly of the optoelectronic adapter A and the optoelectronic connector C.

In some embodiments, the optical transceiver module 30 is served as an optical network unit (ONU), and the optical transceiver module 30 is utilized for signal transmission between optical line terminals (OLTs) and capable of transmitting signals to various interfaces.

Please refer to Fig. 3 to Fig. 7. In some embodiments, the optical transceiver module 30 is a bi-directional optical sub-assembly (BOSA) including both the transmitter optical sub-assembly 33 (TOSA) and the receiver optical sub-assembly 34 (ROSA). The transmitter optical sub-assembly 33 is configured to convert electrical signals into optical signals, and the receiver optical sub-assembly 34 is configured to convert optical signals into electrical signals, so that the optical transceiver module 30 capable of performing optical-electrical conversion or electrical-optical conversion can be implemented.

Please refer to Fig. 3 to Fig. 7. In some embodiments, a function module is provided in the housing 31 of the optical transceiver module 30 for performing optical-electrical conversion or electrical-optical conversion. In these embodiments, the housing 31 is a hexahedral structure, a portion of the optical mating terminal 32 is in the housing 31 and corresponds to the function module, and another portion of the optical mating terminal 32 protrudes from one surface of the housing 31. A portion of the transmitter optical sub-assembly 33 is in the housing 31 and corresponds to the function module, and another portion of the transmitter optical sub-assembly 33 protrudes from one surface of the housing 31. In this embodiment, the transmitter optical sub-assembly 33 and the optical mating terminal 32 respectively protrude from two opposite surfaces of the housing 31. In some embodiments, the optical mating terminal 32 is a hollow cylindrical structure extending along the first direction D1, the portion of the transmitter optical sub-assembly 33 protruding form the housing 31 is configured as a plurality of optical transmitting terminals, and the optical transmitting terminals also extend along the first direction D1.

Please refer to Fig. 3 to Fig. 7. In some embodiments, a portion of the receiver optical sub-assembly 34 is in the housing 31 and corresponds to the function module, another portion of the receiver optical sub-assembly 34 protrudes from one surface of the housing 31, and the portion of the receiver optical sub-assembly 34 protruding from the housing 31 is configured as a plurality of optical receiving terminals. In these embodiments, each of the optical receiving terminals is an L-shaped structure and comprises a first section and a second section connected to each other. The first section protrudes from the housing 31 and extends along the second direction D2, the second section extends along the first direction D1, and a free end of the second section of the optical receiving terminal of the receiver optical sub-assembly 34 and a free end of the optical transmitting terminal of the transmitter optical sub-assembly 33 are arranged at the same side of the housing 31.

Please refer to Fig. 3 to Fig. 7. In some embodiments, portions of the penetration hole 23 of the main body 20 passing through the first portion 21 and the second portion 22 are both circular. The second portion 22 further has an opening 223 in communication with the accommodation groove 221. The accommodation groove 221 has two side walls 2211 and a bottom portion 2212, the two side walls 2211 are opposite to each other, the two side walls 2211 and the bottom portion 2212 are flat surfaces, the opening 223 is between the two side walls 2211, and the penetration hole 23 is in communication with the accommodation groove 221. In these embodiments, when the main body 20 is assembled with the mating shell 10, the position of the opening 223 of the main body 20 corresponds to the position of one of the notches 142 of the mating shell 10. Therefore, when the optical transceiver module 30 is accommodated in the accommodation groove 221 of the main body 20, the housing 31 of the optical transceiver module 30 abuts against the side walls 2211 and the bottom portion 2212 of the accommodation groove 221, the optical mating terminal 32 passes through a portion of the penetration hole 23 defined through the first portion 21, and the optical receiving terminals of the receiver optical sub-assembly 34 pass through a portion of the penetration hole 23 defined through the second portion 22. Accordingly, the optical transceiver module 30 can be stably accommodated in the accommodation groove 221 of the main body 20.

Please refer to Fig. 3 to Fig. 7. In some embodiments, the main body 20 further has two channels 24 defined through the first portion 21 and the second portion 22 of the main body 20 along the first direction D1, and the two channels 24 are at two opposite sides of the accommodation groove 221. In these embodiments, each of the conductive terminals 40 is inserted into a corresponding one of the channels 24. One of two ends of each of the conductive terminals 40 protrudes from the first portion 21 so as to be electrically connected to the optoelectronic connector C, and the other end of each of the conductive terminals 40 protrudes from the second portion 22 so as to be electrically connected to an apparatus terminal (in this embodiment, for example, the apparatus terminal may be a vehicle-mounted camera B, but the instant disclosure is not limited thereto).

Please refer to Fig. 1 to Fig. 3. In some embodiments, the optoelectronic adapter A further comprises a housing component 50. In these embodiments, the extension portion 13 of the mating shell 10 is a plate structure. The housing component 50 is connected to the extension portion 13 of the mating shell 10 to enclose the main body 20, the optical transceiver module 30, and the conductive terminals 40. In some embodiments, the housing component 50 comprises a first housing 51 and a second housing 52, and both of the first housing 51 and the second housing 52 are hollow structures. The optoelectronic adapter A is accommodated in the first housing 51, the mating shell 10 is positioned with the inner surface of the first housing 51, and the first body 12 protrudes from the first housing 51. The vehicle-mounted camera B is accommodated in the second housing 52 and is adapted to be optically/electrically connected to the optoelectronic adapter A. The second housing 52 is assembled with the first housing 51. Therefore, a modularized product can be provided.

It is understood that, the structure of the first housing 51 of the housing component 50 is not limited to the foregoing embodiments; in some other embodiments, the first housing 51 of the housing component 50 may be formed by configuring the extension portion 13 of the mating shell 10 as the first housing 51. Accordingly, the assembling steps for assembling the mating shell 10 and the housing component 50 can be reduced, thereby satisfying different manufacture or product demands.

Please refer to Fig. 1 to Fig. 3. In some embodiments, the first body 12 of the mating shell 10 further comprises a positioning portion 122, and the positioning portion 122 is on an outer surface of the first body 12. In these embodiments, the positioning portion 122 is a protruding structure, and the shell C2 of the optoelectronic connector C has a fitting groove C21. Accordingly, when the optoelectronic connector C is assembled with the optoelectronic adapter A, the positioning portion 122 of the optoelectronic adapter A is accommodated in the fitting groove C21, so that the positioning portion 122 is physically positioned with the fitting groove C21. At the same time, the optoelectronic adapter A is inserted into a space between the shell C2 and the inner frame C1 of the optoelectronic connector C with the mating shell 10, the optical mating terminal 32 of the optoelectronic adapter A is fitted over the insertion pin C3 to establish optical signal connection, and the conductive terminals 40 are inserted into the conductive holes C11 to establish electrical signal connection. Accordingly, through the positioning between the positioning portion 122 and the fitting groove C21, the optoelectronic connector C and the optoelectronic adapter A can be assembled with each other in a correct orientation, thereby enhancing the structural stability of the assembly.

## Claims

1. An optoelectronic adapter (A), comprising:
a mating shell (10) having a through hole (11);
a main body (20) comprising a first portion (21) and a second portion (22) connected to each other, wherein the main body (20) has a penetration hole (23) in communication with the first portion (21) and the second portion (22), the main body (20) passes through the through hole (11) of the mating shell (10), and the second portion (22) has an accommodation groove (221);
an optical transceiver module (30) retained in the accommodation groove (221) of the main body (20), wherein the optical transceiver module (30) comprises a housing (31), an optical mating terminal (32), a transmitter optical sub-assembly (33), and a receiver optical sub-assembly (34), the optical mating terminal (32), the transmitter optical sub-assembly (33), and the receiver optical sub-assembly (34) are respectively connected to the housing (31), and the optical mating terminal (32) protrudes from the penetration hole (23) and is at one side of the first portion (21); and
two conductive terminals (40) passing through the main body (20), wherein portions of the two conductive terminals (40) are in the through hole (11).

2. The optoelectronic adapter (A) according to claim 1, further comprising a housing component (50) connected to the mating shell (10) and enclosing the main body (20), the optical transceiver module (30), and the two conductive terminals (40).

3. The optoelectronic adapter (A) according to claim 1, wherein the mating shell (10) comprises a first body (12) and a second body ()14 connected to each other, the through hole (11) is in communication with the first body (12) and the second body (14), the first portion (21)of the main body (20) is in the first body (12), and the second portion (22) of the main body (20) is in the second body (14).

4. The optoelectronic adapter (A) according to claim 3, wherein the second body (14) of the mating shell (10) further comprises a first engaging portion (143), the second portion (22) of the main body (20) further comprises a second engaging portion (222), and the first engaging portion (143) of the mating shell (10) is engaged with the second engaging portion (222) of the main body (20).

5. The optoelectronic adapter (A) according to claim 4, wherein the first engaging portion (143) is an engaging groove, and the second engaging portion (222) is a protruding block.

6. The optoelectronic adapter (A) according to claim 3, wherein an outer surface of the first body (12) of the mating shell (10) further comprises a positioning portion (122).

7. The optoelectronic adapter (A) according to claim 3, wherein the first body (12) of the mating shell (10) further comprises a first guiding portion (121), the first portion (21) of the main body (20) further comprises a second guiding portion (211), and the second guiding portion (211) of the main body (20) is correspondingly limited by the first guiding portion (121).

8. The optoelectronic adapter (A) according to claim 7, wherein the two conductive terminals (40) extend along a first direction (D1), the first guiding portion (121) is an elongated block extending along the first direction (D1), the second guiding portion (211) is a groove, and a shape of the second guiding portion (211) corresponds to a shape of the first guiding portion (121).

9. The optoelectronic adapter (A) according to claim 1, wherein portions of the penetration hole (23) of the main body (20) passing through the first portion (21) and the second portion (22) are both circular, the second portion (22) further has an opening (223) in communication with the accommodation groove (221), the accommodation groove (221) has two side walls (2211) and a bottom portion (2212), the two side walls (2211) are opposite to each other, the two side walls (2211) and the bottom portion (2212) are flat surfaces, and the opening (223) is between the two side walls (2211).

10. The optoelectronic adapter (A) according to claim 9, wherein the transmitter optical sub-assembly (33) of the optical transceiver module (30) is arranged along an extension direction of the optical mating terminal (32), and the receiver optical sub-assembly (34) protrudes from the opening (223).
